# EUROPEAN PATENT APPLICATION

(11) **EP 4 775 007 A1**
(43) Date of publication of application: **15.07.2026**
(21) Application number: 25216164.1
(22) Date of filing: 17.11.2025
(51) Int. Cl.: A01B 76/00, A01C 21/00

(54) **DETECTION SYSTEM AND METHOD FOR DETECTING AN AGRICULTURAL CHARACTERISITC WITH SUCH**

(30) Priority: 10.01.2025 US 202519016652
(71) Applicant: Deere & Company, Moline, IL 61265 (US)
(72) Inventor: Orth, Matthew, Mannheim (DE); Lindner, Douglas, Mannheim (DE); Bonefas, Zachary T., Mannheim (DE); Creger, Tucker, Mannheim (DE)
(74) Representative: Reichert, Christian

(57) **Abstract**

A detection system (200) for detection of an agricultural characteristic during a performance of an agricultural operation by an agricultural machine (100) is disclosed. The detection system (200) comprising: an implement configured for performance of the agricultural operation; a point cloud sensor (210) coupled to the agricultural machine (100), the point cloud sensor (210) configured for receipt, during the performance of the agricultural operation, a captured information corresponding to the agricultural characteristic, the captured information comprising information captured by the point cloud sensor (210) in a near infrared light spectrum or a short wavelength infrared light spectrum; at least one processor (204); and a memory (206) coupled with the processor (204), the memory (206) including instructions that when executed by the processor (204) cause the processor (204) to: determine, from the captured information, a reflectance value; determine, using at least the reflectance value, an object represented by the captured information; and determine, using at least the captured information, at least one of a location of the object, a characteristic of the object, and whether the object or the agricultural operation satisfies a predetermined threshold. Furthermore, a method (700) for detecting an agricultural characteristic with such detection system (200) is disclosed.

## Description

### FIELD OF THE DISCLOSURE

The present disclosure generally relates to detection of a variety of agricultural properties, and, more specifically, to systems and methods that utilize either or both near infrared and short wavelength infrared image data in the detection of one or more agricultural properties.

### BACKGROUND

Agricultural planters, such as multi-row crop planters, are typically pulled by a tractor, or other work vehicle, and can plant seeds at a selected depth within a trench or furrow formed in the soil in a direction that is substantially parallel to the travel direction of the tractor when being pulled through a field. The depth at which seed is to be planted in the ground can be based on a variety of different criteria, including, for example, the seed type and environmental conditions, such as, for example, soil composition, moisture levels, and weather predictions, among other considerations. Further, the selected depth at which seed is to be planted is often based, at least in part, on the premise that the planting of the seed via a planter row unit will occur in a direction in which the planter row unit is generally perpendicular to the adjacent ground surface. However, undulations in the ground surface along which planter row units travel can result in deviations in the actual depths and locations at which the planter row units plant seeds. Further, the structure of the furrow, in addition to depth, as well as the characteristics of the associated soil, including moisture content, can each impact the growth of the seeds planted therein, and thus play a role in the associated crop yield.

### SUMMARY

The present disclosure may comprise one or more of the following features and combinations thereof.

In one embodiment of the present disclosure, a method is provided for detecting an agricultural characteristic during a performance of an agricultural operation by an agricultural machine. The method can include receiving, from a point cloud sensor coupled to the agricultural machine and during the performance of the agricultural operation, a captured information corresponding to the agricultural characteristic. Further, the captured information can comprise information captured by the point cloud sensor in a near infrared light spectrum or a short wavelength infrared light spectrum. Further, a reflectance value can be determined from the captured information. At least the reflectance value can be used to determine an object represented by the captured information. The method can also include identifying, using at least the captured information, at least one of a location of the object, a characteristic of the object, and whether the object or the agricultural operation satisfies a predetermined threshold.

According to another embodiment, a detection system is provided for detection of an agricultural characteristic during a performance of an agricultural operation by an agricultural machine. The detection system can include an implement configured for performance of the agricultural operation and a point cloud sensor coupled to the agricultural machine. The point cloud sensor can be configured for receipt, during the performance of the agricultural operation, a captured information corresponding to the agricultural characteristic. The captured information can comprise information captured by the point cloud sensor in a near infrared light spectrum or a short wavelength infrared light spectrum. The detection system can also include at least one processor and a memory coupled with the processor. The memory can include instructions that when executed by the processor can cause the processor to determine, from the captured information, a reflectance value and determine, using at least the reflectance value, an object represented by the captured information. Additionally, the memory can include instructions that when executed by the processor can further cause the processor to determine, using at least the captured information, at least one of a location of the object, a characteristic of the object, and whether the object or the agricultural operation satisfies a predetermined threshold.

These and other features of the present disclosure will become more apparent from the following description of the illustrative embodiments.

### BRIEF DESCRIPTION OF THE DRAWINGS

The disclosure contained herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements.
Figure 1 illustrates an exemplary agricultural machine in the form of an agricultural seeder and an agricultural vehicle.
Figures 2A and 2B illustrate an exemplary planter row unit that can be used with the agricultural seeder shown in Figure 1.
Figure 3 illustrates a simplified block diagram of an exemplary detection system for determining a variety of agricultural characteristics.
Figure 4 illustrates an exemplary point cloud sensor (PCS) coupled to a portion of a planter row unit.
Figure 5 illustrates a simplified block representation of a PCS configured for detecting information regarding agricultural characteristics relating to planting characteristics involving seeds and an associated furrow.
Figure 6 illustrates a simplified block representation of a fertilizer applicator applying a fertilizer, and PCS detecting information regarding planting characteristics that can include the fertilizer application to either or both seeds and soil of the furrow.
Figure 7 illustrates a simplified flow diagram of an exemplary method of using a detection system for detecting a variety of agricultural characteristics.
Figure 8 illustrates an exemplary chart depicting reflectance as a function of wavelength for at least a portion of three objects associated with an agricultural operation.

Corresponding reference numerals are used to indicate corresponding parts throughout the several views.

### DETAILED DESCRIPTION

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

Embodiments of the subject application are generally directed to a detection system for detecting one or more agricultural characteristics, the detection system having one or more point cloud sensors (PCS) that utilize either or both near infrared and short wavelength infrared data in connection with obtaining information used by the detection system to automatically detect, including automatically monitor, the agricultural characteristics. The agricultural characteristics detected by the detection system can pertain to a wide range of characteristics relating to agricultural operations, including, for example, either or both planting characteristics and system performance. For example, determinations made by the detection system using information provided by operation of the PCS can include, for example, seed detection, detection of soil moisture content, and/or field residue detection, among other planting characteristics that can impact planting, crop growth, and crop yield. With respect to embodiments in which the detection system is utilized with agricultural machines that include one or more planter row units, such planting characteristics can, for example, also relate to a furrow in which seeds are, or will be, planted, including, for example, the structure of the furrow, the depth of the furrow, the moisture content of the soil that defines the furrow, or the presence of weeds, rocks, old crop material or other field debris in the furrow, as well as various combinations thereof, among other furrow related information. The detection system can also be utilized to obtain information that can identify predictive changes in ground elevation that can facilitate, among other changes, proactive adjustments in control strategies for the planter row unit that seek to maintain a selected furrow depth and/or seed planting depth. Additionally, or alternatively, the planting characteristics can relate to the seed(s) that is/are planted in the furrow, including, for example a location, depth, orientation, or health of each seed, individually, among other seed related information. Further, additionally, or alternatively, the planting characteristics can relate to an application, or variation in the application, of a fertilizer to either or both soil in the furrow and the seed(s), including, for example, an indication of the location(s) at which fertilizer may, or may not, be present on the seed or the adjacent soil of the furrow. Further, according to certain embodiments, the detection system can utilize a detection of the fertilizer as a way for identifying, or confirming, the location of seed placement. Such information obtained via use of the PCS can further be used with other systems, including, but not limited to, location and mapping systems, in connection with generating detailed maps of planting information, among other manners of providing visualization of planter data information and providing operator alerts.

According to certain environments, information provided by the PCS can also be utilized in connection with evaluating system performance of the agricultural machine or associated agricultural operation. For example, information provided by the PCS can be used to detect a potential malfunction of a plant row unit, planting malfunction, whether the PCS is to be cleaned, or the quality of the closing of the furrow that is being achieved by the planter row unit, as well as various combinations, among other information.

The use of the PCS can allow the detection system to obtain accurate information in situations and environments in which the effectiveness or accuracy of other types of sensor systems, including sensor systems that rely on visible light, can be compromised. For example, the use of either or both near infrared (NIR) and short wave infrared (SWIR) image data obtained via the PCS discussed herein can provide accurate information at dust levels that may otherwise impede the operation of visual light-based systems. Additionally, the PCS may not be affected to the same extent as traditional visual light-based sensor systems by reductions in visible light, including reductions relating to an area having reduced illumination caused by shading or sun positioning. Further, the inclusion of one or more PCS in the detection system can advert safety concerns regarding exposure of the eyes of workers that traditionally can be associated with visible light systems, including, but not limited to, laser light systems.

Accordingly, embodiments discussed herein can also be used in combination with other sensor systems of the agricultural machine, including vision systems that utilize visible light, including, but not limited to, red, green, and blue (RGB) camera and laser light systems. According to such embodiments, information determined by the detection system can be used with such other traditional visions systems via sensor fusion.

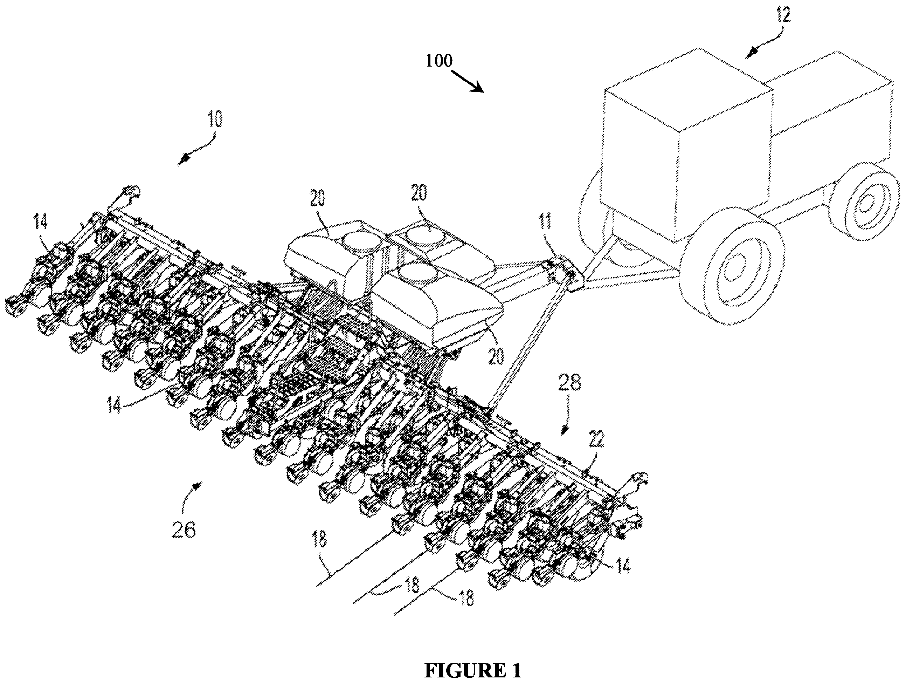

Figure 1 illustrates an exemplary agricultural machine 100 that includes an agricultural seeder 10 and a work vehicle, which, in this example, is a tractor 12. The depicted tractor 12 can be coupled with, and moves, the seeder 10 with a suitable coupling arrangement, such as, for example, a draw bar or 3-point hitch arrangement 11, among others. Other embodiments however are contemplated, including an autonomous tractor pulling the seeder 10, as well as an entirely self-contained autonomous seeder in which the seeder, including the planter row units and a propulsion system for the seeder, are a complete and unitary seeding system.

According to the illustrated example, the depicted seeder 10 is a row crop planter that includes a plurality of planter row units 14. According to certain embodiments, each planter row unit 14 may, or may not, have a substantially identically configured. Each planter row unit 14 can be configured to deposit seeds of varying sizes in respective furrows 18, not all of which are illustrated, in the soil for raising crops. In some embodiments, two or more of the planter row units 14 are configured to deposit seeds of different sizes and/or seeds for different crop types. Typically, however, the size of the seeds being deposited is the same for each planter row unit 14. In other embodiments, seeds of different sizes may be deposited side by side in adjacent rows at different planting depths, which can depend on the size of the seed.

A plurality of seed bins 20 can be operatively connected to each of the planter row units 14, and are configured to hold seeds for planting. In other embodiments, a single seed bin is used to supply seeds to all planter row units 14. In operation, each seed bin 20 can hold the same type of seeds or different types of seeds, which may be directed to each of the planter row units 14, as necessary. A tool bar 22 can extend, and is coupled, to each of the planter row units 14 to maintain a predetermined spacing between furrows 18. In some embodiments, a rockshaft may be located over or above the tool bar 22. In some embodiments, the spacing between planter row units 14 is adjustable to provide for crops of different types that require spacing between furrows 18 based on the type of seed.

While the exemplary seeder 10 shown in Figure 1 illustrates each of the planter row units 14 being in a side-by-side arrangement in which the planter row units 14 are generally in a parallel arrangement and/or at about a same distance from the tool bar 22, embodiments discussed herein can accommodate a staggering in the alignment of adjacent planter row units 14. For example, according to certain embodiments discussed below, a planter row units 14 can be positioned further upstream of an adjacent or neighboring planter row unit 14. In some instances, such a staggered alignment can result in a planter row unit 14 being in closer proximity to the tool bar 22 than adjacent planter row units 14. Additionally, with respect to some embodiments, such a staggered alignment can result in at least a portion of one planter row unit being one side of the tool bar 22, such as, for example, an upstream or proximate side 28 of the tool bar 22, while an adjacent planter row unit 14 can be positioned on the other, or downstream or distal side 26 of the tool bar 22. Such a staggered alignment of planter row units 14 can be configured such that narrower portions of adjacent planter row units 14 are directly adjacent to each other, and/or wider portions of a planter row unit 14 are adjacent to a narrower portion of an adjacent planter row unit 14. By providing such a staggered alignment in which wider portions of adjacent planter row units are offset from each other in at least a direction of travel of the planter row units 14, adjacent planter row units 14 can be positioned in closer proximity with each other, thereby providing the capability to reduce the spacing between furrows 18, and accommodate the planting of seeds at locations that provide relatively narrow crop spacing.

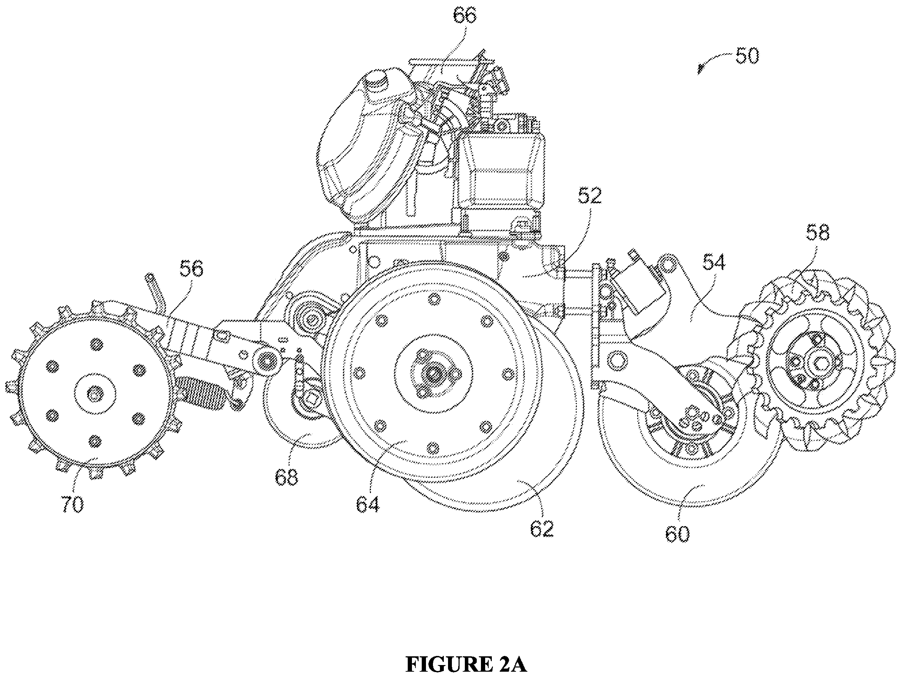

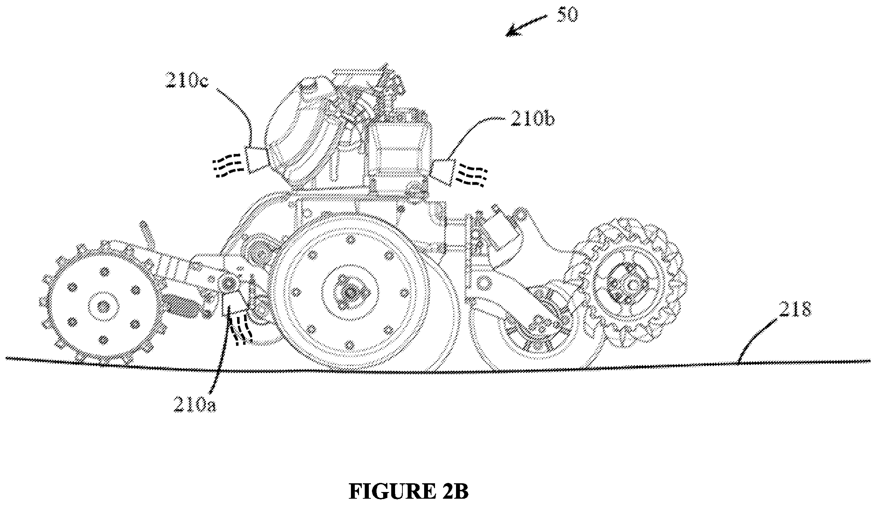

Figures 2A and 2B illustrate an exemplary planter row unit 50 that can, along with other types of planter row units 14, be utilized with embodiments of the subject application. The illustrated planter row unit 50 includes a central frame 52 that is pivotally coupled to a front frame arm 54 and a rear frame arm 56. The front frame arm 54 in the illustrated exemplary planter row unit 50 can be coupled to a pair of row cleaners 58 and a coulter blade 60. The central frame 52 can be coupled to a disc 62, also known as a blade, shank, knife, or a cutting device or member. The disc 62 can extend inwardly into the ground at least until one or more gage wheels 64, also known as a depth-gaging or surface following device or member, engages the soil. According to the illustrated planter row unit 50, gage wheels 64 are positioned on opposing sides of the disc 62. Additionally, with respect to at least certain types of planter row units, the relationship between the gage wheels 64 and the disc 62 can be adjusted so as to at least assist in adjusting a depth to which the planter row unit 50 deposits seeds in the adjacent soil. According to certain embodiments, seed that is received at or around a hopper 66 of the planter row unit 50 can travel through at least a portion of the planter row unit 50 before being deposited from the planter row unit 50 at or around a base of the disc 62. The planter row unit 50 can include a press wheel 68 downstream of the location at which the planter row unit 50 is to deposit seed into the soil. Further, the rear frame arm 56 in the illustrated planter row unit is depicted as being coupled to a pair of closing wheels 70.

While for at least purposes of illustration specific embodiments are discussed herein with respect to at least a seeder 10, planter row unit 50, and tractor 12, embodiments of the subject application are applicable to a variety of other types of agricultural operations and the associate equipment, including, but not limited to, planters. Moreover, embodiments discussed herein are applicable to agricultural machines, including, but not limited to, work vehicles (e.g., tractors), equipment, tools, and implements, as well as combinations thereof, collectively referred to herein as agricultural machines 100, the can be utilized for a variety of agricultural operations. For example, such agricultural machines 100, which may, or may not, be self propelled, can include, but are not limited to, planters, tillage equipment, sprayers, windrowers, harvesters, combines, tractors, and fertilizers, among others. Additionally, embodiments discussed herein are also applicable to vehicles and equipment used for a variety of other tasks, including, but not limited to, construction and forestry, among others. However, for at least purposes of discussion, such other types of equipment will also be generally referred to herein as agricultural machines 100.

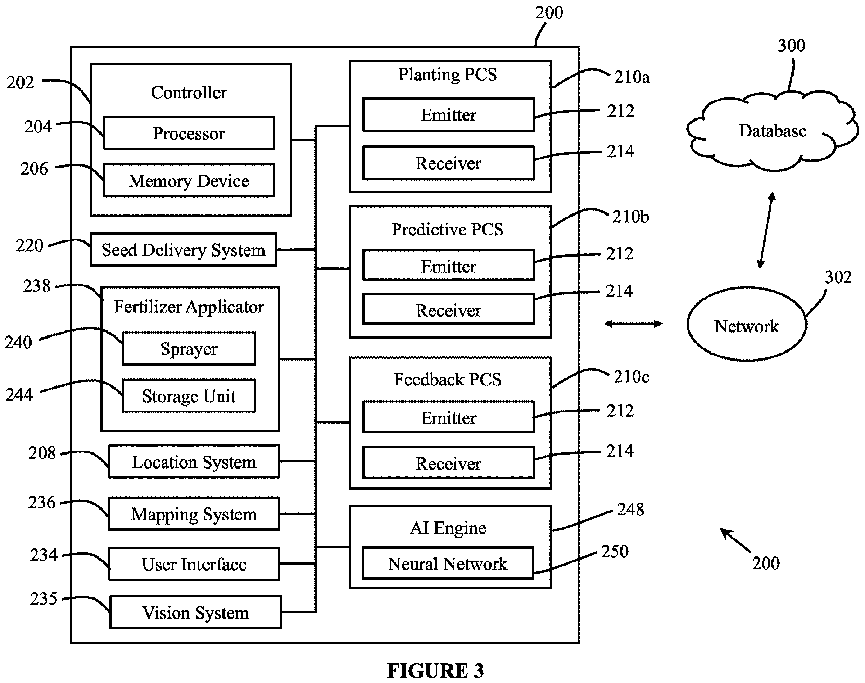

Figure 3 illustrates a simplified block diagram of an exemplary detection system 200 for detecting a variety of agricultural characteristics, which in these example including planting characteristics and characteristics relating to system performance. According to certain embodiments, the detection system 200, or a portion thereof, can be positioned on or at the agricultural machine 100, or distributed about different systems, devices, machines, or components. As illustrated, the detection system 200 can include a controller(s) 202 having one or more processors 204 and one or more memory devices 206. The processors 204 can be configured to follow instructions, including control instructions contained with, or are part of, one or more of the memory devices 206, including, for example, a non-transitory machine-readable medium. Additionally, according to certain embodiments, the controller 202 can include one or more graphics processing units (GPU).

The processors 204 can be embodied as any type of processor or other compute circuit capable of performing various tasks. In some embodiments, each processor 204 can be embodied as a single or multi-core processor, a microcontroller, or other processing or controlling circuit. Additionally, in some embodiments, each processor 204 can be embodied as, include, or be coupled to an FPGA, an application specific integrated circuit (ASIC), reconfigurable hardware or hardware circuitry, or other specialized hardware to facilitate performance of the functions described herein. In some embodiments still, each processor 204 can be embodied as a high-power processor, an accelerator co-processor, an FPGA, or a storage controller.

Each memory device 206 can be embodied as any type of volatile (e.g., dynamic random-access memory (DRAM), etc.) or non-volatile memory capable of storing data therein. Volatile memory can be embodied as a storage medium that requires power to maintain the state of data stored by the medium. Non-limiting examples of volatile memory can include various types of random-access memory (RAM), such as dynamic random-access memory (DRAM) or static random-access memory (SRAM). In some embodiments, each memory device 206 can be embodied as a block addressable memory, such as those based on NAND or NOR technologies. Each memory device 206 can also include future generation nonvolatile devices or other byte addressable write-in-place nonvolatile memory devices. Additionally, in some embodiments, each memory device 206 can be embodied, or otherwise include, a memory device that uses chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory. Each memory device 206 can refer to the device itself or to a packaged memory product. In some embodiments still, 3D crosspoint memory can comprise a transistor-less stackable cross point architecture in which memory cells sit at the intersection of word lines and bit lines and are individually addressable and in which bit storage is based on a change in bulk resistance. In some embodiments yet still, all or a portion of each memory device 206 can be integrated into the processor(s) 204. Regardless, each memory device 206 can store various software and data used during operation such as task request data, kernel map data, telemetry data, applications, programs, libraries, and drivers. Thus, the memory devices 206 can include information, including, but not limited to, algorithms and look-up tables, among other information, that can used by the processor 204, including with respect to features corresponding to wavelength information provided by operation of the PCS 210, as discussed below.

The detection system 200 can include one or more PCS 210a, 210b, 210c (generally referred to herein as PCS 210) that can emit, and detect, either or both a near infrared and a short wavelength infrared signal of one or agricultural characteristics, as discussed above. According to certain embodiments, the detection system 200 can be a camera compute system that can utilize short wave infrared (SWIR) PCSs 210 that are sensitive in the SWIR band. According to such embodiments, the detection system 200 can, from information provided by one or more SWIR PCSs, derive depth and three dimensional geometric point cloud data via algorithms used by the controller(s) 202, which may be, for example, a controller that may be run locally on a camera of the detection system 200, dedicated or non-dedicated to the detection system 200, or a remotely connected controller, among other controllers. By using SWIR based PCSs 210, the detection system 220 can be able to obtain point cloud geometry measurements, as well as measure, and/or measure more effectively, various qualities of the planting system in a more environmentally robust manner.

A variety of different types of sensors, or combination of sensors, can be utilized for the PCS 210, including, for example, Time-of-Flight (ToF) sensors, Indirect Time-of-Flight (iToF) sensors, stereo depth, and/or structured light sensors (e.g., laser line way), including, for example, flood illumination/dot projection sensors, among other NIR or SWIR type sensors. Moreover, according to certain embodiments, one or more, if not all, of the PCSs 210 can utilize non-visible light, including, for example, non-visible light in the range of about 900 nanometers (nm) to about 3000 nm in wavelength. Additionally, or alternatively, the one or more, if not all, of the PCSs 210 can utilize non-visible light in the range of about 750 nm to about 1400 nm in wavelength. Thus, according to certain embodiments, the PCS 210 can be configured to utilize non-visible light that does not exceed a wavelength above 3000 nm. As shown in Figure 3, according to certain embodiments, the PCS 210 can include an NIR or SWIR waveband light illuminator or emitter 212, and a detector or receiver 214 that can detect a reflectance, or emittance, of light, from one or more objects, including, for example soil, seed, fertilizer, and/or field debris, among other items, in or around a furrow, among other objects.

According to certain embodiments, the PCS 210 is configured to capture information, including data, that can indicate different reflective properties in the NIR or SWIR wavelength, including wavelength range, of one or more objects. For example, as different objects can have different reflective characteristics, according to certain embodiments, the intensity of the light in the NIR or SWIR wavelengths reflected back, or otherwise emitted, to the receiver 214 can provide information the controller 202 can use to identify the corresponding object and/or properties of that object. Additionally, or alternatively, with at least certain types of PCSs 210, the time taken for different objects to reflect light transmitted from the emitter 212 back to the receiver 214 of the PCS 210 can provide an indication of the reflectance of the object that the controller 202, including the processor 204, can use in not only identifying the object, but also characteristics of the object. For example, information regarding the time for a portion or area of a furrow to reflect a light in the NIR or SWIR wavelength can be used by the controller 202, including the processor 204, to derive a depth of the furrow at one or more locations about the furrow.

As shown in Figures 2B and 3, according to certain embodiments, the detection system 200 can include one or more PCSs 210 that can be positioned at different locations, including, for example, different locations about the agricultural machine 100 so as to provide, for example, different types of information. For example, according to certain embodiments, the PCS 210 can be a planter PCS 210a that is positioned at a location about a planter row unit 50 to capture information regarding one or more, if not each, seed deposited, or being deposited, by that planter row unit 50 into a furrow. The planter PCS 210a can be at a known location on the planter row unit 50 such that the captured information obtained via use of the PCS 210a can, when used in connection with a location system 208, such as, for example, a global positioning system (GPS), allow for a determination of the specific location at which each, specific seed has been planted, or otherwise deposited, into the furrow. Additionally, as discussed below, such a planter PCS 210a can be used to capture information used by the controller 202 to determine a variety of other types of information relating to the planted seed, including, for example, a health, orientation, or planting depth of the seed, and/or related fertilizer information, among other information. Additionally, the planter PCS 210 can provide information regarding the structure of the furrow at which the seed(s) is/are planted, including, but not limited to, a depth of the furrow and/or soil moisture content at the location at which the seed(s) is/are deposited, among other information. Further, the planter PCS 210 can provide information regarding the application of fertilized onto the seed(s) and/or the adjacent soil.

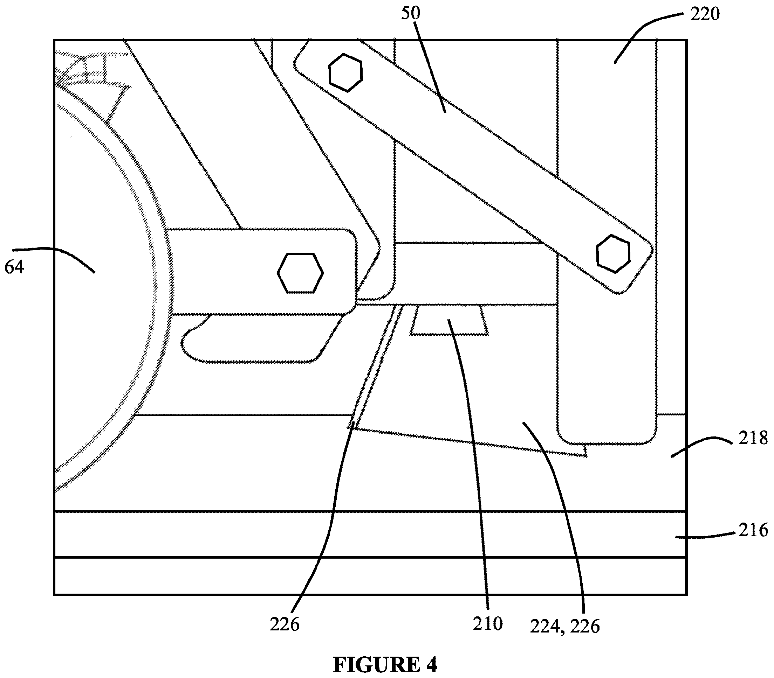

Referencing Figure 4, according to certain embodiments, one or more of the planter PCSs 210a can be positioned at a portion of a lower surface of the planter row unit 50 such that the planter PCSs 210a can emit a signal directly toward the adjacent ground surface 218, including the furrow 216, with little or no interference from other portions or structures of the planter row unit 50. Moreover, in the illustrated embodiment, a planter PCS 210a can be positioned on an underside or bottom surface of the planter row unit 50 at a position between the coulter blade 60 or brush belt housing 220 of a seed delivery system 222 (Figure 3) and the gage wheel 64. Additionally, as generally indicated by Figure 4, according to certain embodiments, the planter PCS 210a, as well as the other PCSs 210, can be shielded by a housing or shield 224, which can have a plurality of sidewalls 226 that can at least partially surround the planter PCS 210a. The shield 224 can be configured to at least assist in preventing, at least during planting, debris, including fertilizer, from collecting on and/or becoming adhered to the PCS 210. According to certain embodiments, the sidewalls 226 can generally form a "U" shape shield 224 about the planter PCS 210a. Further, according to certain embodiments, the brush belt housing 220 can further provide at least a portion of the shield 224 about the planter PCS 210a. For example, according to certain embodiments, the sidewalls 226 and brush belt housing 220 can form an open-ended shield 224 about at least a portion of the planter PCS 210a. Although the one or more PCSs 210a are discussed herein and illustrated as being positioned around the lower surface of the planter row unit 50, one or more, if not all of the PCSs 210a can be positioned at a variety of other locations.

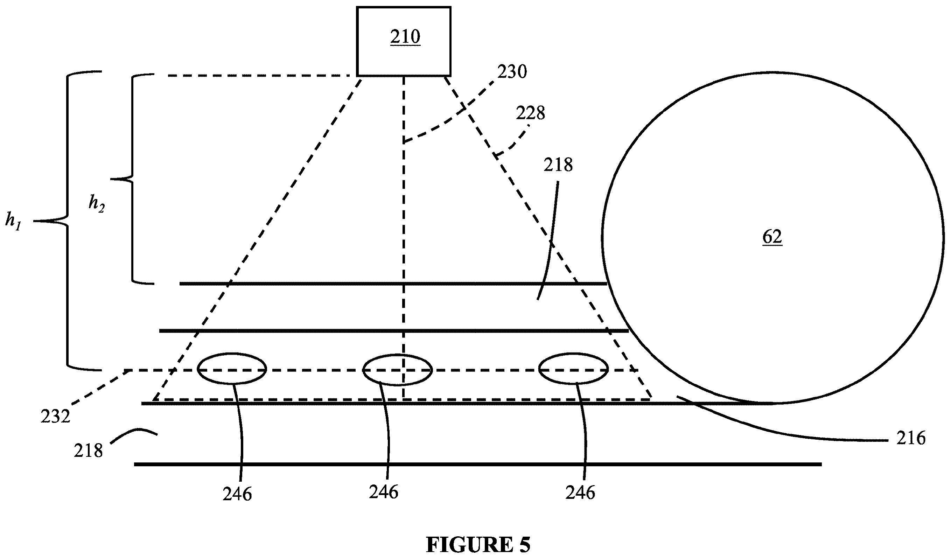

Figure 5 is simplified block representation of a PCS 210, such as a planter PCS 210a, configured for detecting information regarding agricultural characteristics in the form of at least planting characteristics involving seeds and the associated furrow. As shown, according to certain embodiments, the planter PCS 210a can be positioned in at least an attempt to generally maintain the field of view 228 of the receiver 214 of the planter PCS 210a at an orientation that is generally parallel to the adjacent ground surface 218. Thus, for example, as seen, according to the illustrated embodiment, the PCS 210 is positioned such than an optical axis 230 of the field of view 228 of the receiver 214 of the planter PCS 210a is generally perpendicular to the adjacent ground surface 218. However, according to certain embodiments, the plantar PCS 210a, among other PCSs 210, can be oriented relative to the adjacent ground surface at a variety of other angles, including angles that result in the PCSs 210 being non-perpendicular to the adjacent ground surface.

Additionally, as seen in Figure 5, the position of the planter PCS 210a can be configured such that the planter PCS 210a is at a generally constant height (as generally indicated by *"h₁"* in Figure 5) vertically above a portion of the furrow 216, such as, for example, the bottom of the furrow 216, which can correspond to generally the center of the furrow 216 (as generally indicated by the furrow centerline 232 in Figure 5), which may also correspond to the portion of the furrow 216 generally having the greatest depth into the soil of the adjacent ground surface 218. Such a fixed distance between the planter PCS 210a and the bottom of the furrow 216 can be beneficial with respect to at least potential calibration of the planter PCS 210a. Thus, according to such an embodiment, changes in the depth at which the planter row unit 50 is to cut or otherwise form the furrow 216, including, for example, with respect to the planting of different types of seeds, can result in a similar adjustment in the vertical position of the planter PCS 210a relative to other portions of the planter row unit 50. However, such adjustments can also result in the height between the adjacent ground surface 218 outside of the furrow 216 and the planter PCS 210a (as generally indicated by "*h₂*" in Figure 5) being variable. Thus, for example, as the vertical position of the planter PCS 210a is adjusted with adjustments to the depth of the furrow 216, the planter PCS 210a may be brought into closer or further proximity to the adjacent ground surface 218 outside of the furrow 216.

As also seen in Figures 2B and 3, according to certain embodiments, the detection system 200 can also include one or more predictive PCSs 210b that can provide information that can be utilized to dynamically make a proactive adjustments in a setting or other control strategies of the agricultural machine 100. For example, the predictive PCS 210b can provide information regarding an upcoming change in elevation of the terrain upon which the agricultural machine 100 is traveling, as well as other information, including upcoming wet spots and rocks or other debris in the approaching soil, among other information. Thus, according to certain embodiments, the predictive PCSs 210b can be positioned such that the PCSs 210b can capture information regarding terrain upstream, or in front, of the agricultural machine 100. In the illustrated example, one or more predictive PCS 210b can be positioned at a front end of the agricultural machine 100, or a portion thereof, including, for example, a front end of any, or all, of the depicted seeder 10, tractor 12, or the planter row unit 50, among other locations. Additionally, or alternatively, one or more predictive PCSs 210b can be positioned on the planter row unit 50 at a location that is in front or upstream of the front of the row cleaners 58, among other locations.

According to certain embodiments, the detection system 200 can include one or more feedback PCSs 210c, as illustrated by Figures 2B and 3. The predictive PCSs 210b can be positioned at locations that can assist with proactive adjustments in one or more settings or operations of the agricultural machine 100. Thus, the feedback PCSs 210c can be positioned to provide information that can be utilized to review the performance of one or more components of the agricultural machine 100, among other agricultural characteristics. For example, one or more feedback PCSs 210c can be positioned on the planter row unit 50 at a location that is in behind or downstream of the closing wheels 70 so as to capture information corresponding to the quality of the closure of the furrow 216 by the closing wheels 70, among other information.

According to certain embodiments, the controller 202, including the processor 204, can utilize one or more models or algorithms (collectively referred to here in as models), to identify object information provided by the captured information, has obtained by the PCS(s) 210. Such models can be stored a variety of locations on the detection system 200, including, for example, by the memory device 206, among other locations, or stored offboard, such as, for example, at a remote server or database 300, including a cloud-based database. Such models can be based on a variety of different information, including, for example, known reflectance characteristics of various objects, as well as variations of such reflectance characteristics associated with differences in one or more characteristics, including properties, of the objects, including, for example, moisture content. Further, such models can also consider known information regarding shapes and sizes, including, for example, the shape(s) and size ranges of a generally normal, or healthy, seed, including on a three-dimensional level.

According to certain embodiments, the model(s) used by the processor 202 can be based on one or more recognized patterns relating to the identified objects, or associated properties, including, for example, properties that are developed over time using a relatively large amount of previously obtained captured information. Thus, as discussed below, according to certain embodiments, such models can be updated or modified, including, for example, via machine learning techniques, as one or more detection systems 200 continue to obtain captured information, as well as in response to adjustments or other input and operator may provide the detection system 200, such as for example, by use of the user interface 234, as discussed below.

As further discussed below, according to certain embodiments, the detection system 200 can therefore include a neural network 124 of an artificial intelligence (AI) engine 122. The neural network 124 can be configured to be trained, including for example, via machine-based learning, based on recorded historical captured information and various types of feedback information, including, for example, operator inputted information and associated automatic or manual adjustments in the agricultural operation. Such historical captured information can, for example, be stored and accessible from the database 300, among other locations. Such machine learning by the neural network can be used for either or both the development and refinement of the model(s) utilized by the controller 202 to derive captured information obtained by the PCS 210, including in connection with an identification the objects, or associated characteristics, including properties, of those objects based on detected reflectance values or ranges. Further, the AI engine 122, and associated neural network 124, may be onboard or offboard of the agricultural machine 100.

The controller 202 can be electrically coupled to one or more user interfaces 234, including, for example, a user interface 234 in an operator cab of the tractor 12 or other vehicle or equipment. Additionally, or alternatively, the user interface 234 can be located at a remote location, such as, for example, an operations center, or be a mobile device, including, for example, a handheld mobile device. The user interface 234 can, according to certain embodiments, include either or both an input device and an output device. A variety of different types of devices can be utilized as the user interface 234, including, for example, a touch screen, keyboard, keypad, mouse, switch, joystick, or button, as well as any combinations thereof, among other types of user interfaces.

The detection system 200 can also include, and/or the controller 202 can otherwise be communicatively coupled to, a mapping system 236 that can include logic for generating a variety of different types of maps, including, but not limited to maps that provide the agricultural characteristic information determined from the information obtained via operation of the PCS(s) 210. For example, according to certain embodiments, such information can be used by the mapping system to generate one or more maps that identify the planting location of seeds, individually, among other information. Additionally, or alternatively, such agricultural characteristic information obtained via the PCS(s) 210 can be used by the mapping system 236 to identify, at specific locations, the moisture content of the soil, quality of furrow closing, presence of field debris, variations in fertilizer application, seed planting depth, or furrow depth, as well as various combinations thereof, among other agricultural characteristic information. Further, the maps generated by the mapping system 236 using information obtained using the PCS 210 can supplement, or exceed in terms of detail, maps that traditionally may be generated by agricultural machines 100, including maps generated by agricultural machines during agricultural operations relating to tillage, irrigation, fertilizing, spraying, or harvesting, among other agricultural operations. Further, as discussed below, the maps generated using information obtained using the PCS 210 can provide one or more overlays for maps that may be attained via use of the vision system 235, among other maps.

The detection system 200 can also include, and/or the controller 202 can otherwise be communicatively coupled to, a seed delivery system 222 used in the dispensing or delivery of the seed from the planter row unit 50 into the furrow. The seed delivery system 222 can include one or more sensors that can provide information regarding a seed as the seed is being released from the seed delivery system 222, and, moreover, from the planter row unit 50 and into the furrow. Such information regarding the release of the seed from the seed delivery system 222, including the timing of the release of the seed, can be used by the controller 202 to determine when to activate a fertilizer applicator 238 that can also be part of, or communicatively coupled to, the controller 202. Thus, for example, a detection of a seed by the sensor of the seed delivery system 222 can trigger a timing of an activation of the fertilizer applicator 238 such that a sprayer 240 of the fertilizer applicator 238 sprays, or otherwise deposits, a fertilizer onto the seed, while, or after, the seed, is dispensed into the furrow, and/or a fertilizer 242 onto the seed and/or soil positioned around the seed in the furrow. As indicated by Figure 3, such a fertilizer applicator 238 can include, among other components, one or more storage units 244 containing one or more different types of fertilizers that can be dispensed from the fertilizer applicator 238 via, for example, the sprayer 240.

While Figure 3 illustrates certain features as being part of the detection system 200, including, for example, the location system 232, mapping system 236, seed delivery system 220, fertilizer applicator 238, user interface 234, vision system 235, and an AI engine 248, among others, one or more of such features or systems can be part of another onboard or offboard system, including, for example, located at a remote operations center. Thus, the controller 202, among other portions of the detection system 200, can be coupled to a communication unit that can be configured for either, or both, wired or wireless communications to/from the detection system 200, including, for example, via proprietary and non-proprietary wireless communication protocols. For example, the detection system 200 can include, or be coupled to, a communication unit that can be configured to accommodate Wi-Fi, ZigBee, Bluetooth, radio, cellular, or near-field communications, among other communications that use other communication protocols, including, but not limited to, communications over a wireless network 302, such as, for example internet, cellular, or Wi-Fi networks, as well as combinations thereof. According to certain embodiments, the communication unit can comprise a transceiver. Further, according to certain embodiments, such communication capabilities can allow for the exchange of information to, or from, at least the detection system 200 and other agricultural machines, remote operation centers, servers, and/or a database 300, such as, for example, a cloud-based database, among others.

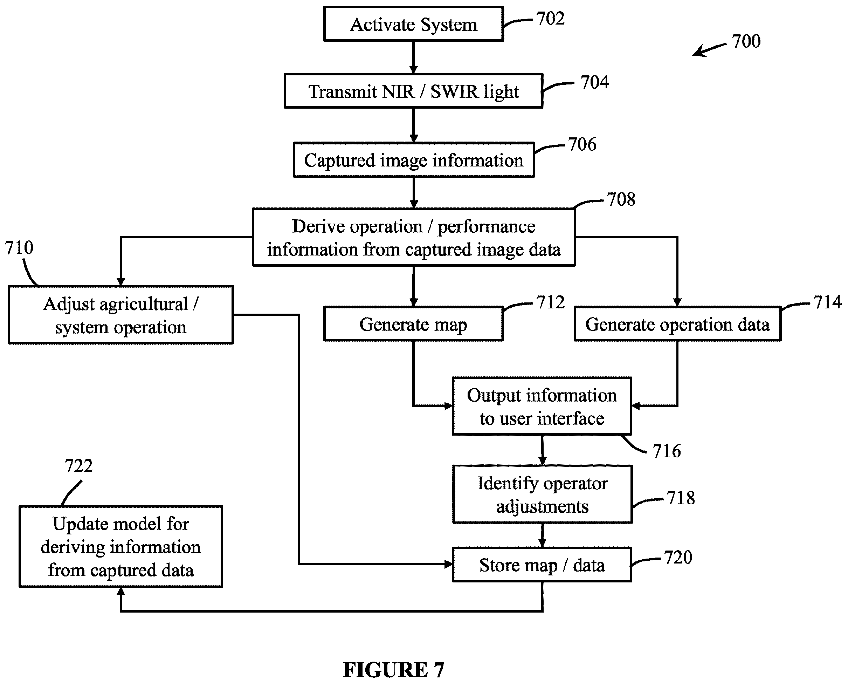

Figure 7 illustrates a simplified flow diagram of an exemplary method 700 of using a detection system 200 for detecting a variety of system and agricultural characteristics. The method 700 is described below in the context of being carried out by the illustrated exemplary detection system 200 shown in at least Figure 3. However, it should be appreciated that method 700 can likewise be carried out by any of the other described implementations, as well as variations thereof. Further, the method 700 corresponds to, or is otherwise associated with, performance of the blocks described below in the illustrative sequence of Figure 7. It should be appreciated, however, that the method 700 can be performed in one or more sequences different from the illustrative sequence. Additionally, one or more of the blocks mentioned below may not be performed, and the method 700 can include steps or processes other than those discussed below.

At block 702, the detection system 200 can be activated, either automatically, or manually. For example, according to certain embodiments, activation of the detection system 200, including for example activation of operation of one or more of the PCSs 210, can occur automatically upon activation of the agricultural machine 100, or, alternatively, upon the agricultural machine 100 being engaged in the performance of an agricultural operation. Alternatively, according to other embodiments, activation of the detection system 200 can be facilitated via receipt by the controller 202 of a command from the operator that is inputted via the user interface 234.

At block 704, with the detection system 200 activated, the emitter 212 of one or more of the PCS(s) 210 can transmit an illumination in the NIR or SWIR wavelength range, as previously discussed. At block 706, the receiver 214 of the PCS 210 can capture information that can indicate a reflectivity level in one or more objects depicted, or captured by, the captured information. According to certain embodiments, one or both of the emitter 212 and the receiver 214 can operate continuously, or, alternatively at certain predetermined intervals. Such selective operation of the emitter 212 and/or receiver 214 can be based on a variety of criteria, including, but not limited to, controlling the data size of captured information communicated to the controller 202 and/or based on processing speeds of the processor 204, among other considerations.

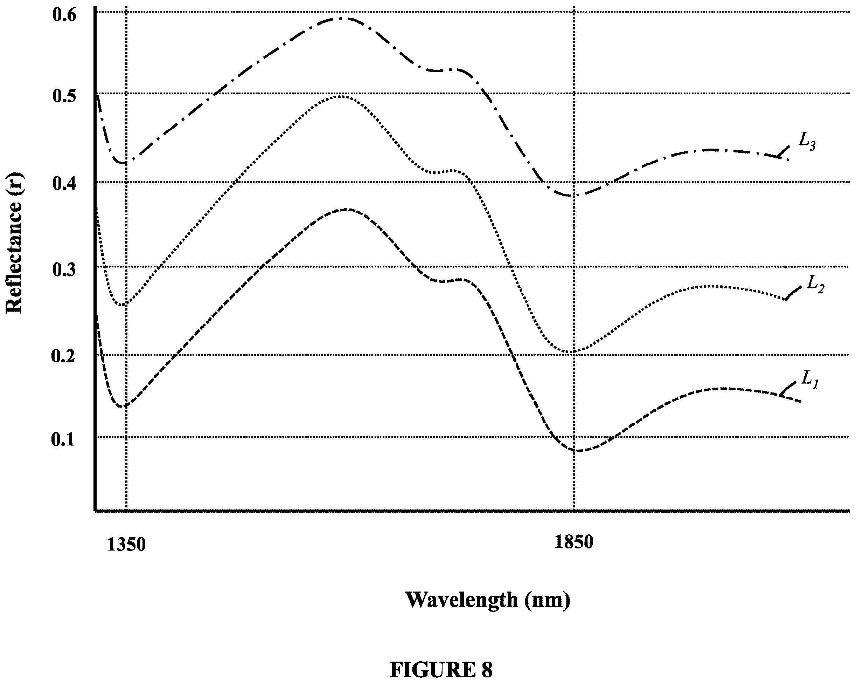

At block 708, the controller 202, including, for example, the associated processor 204, can analyze the captured information obtained by the receiver 214 of the PCS 210 in connection with determining objects and/or various characteristics of the objects captured or otherwise represented in the captured information. For example, as discussed above, the controller 202 can utilize reflectance information provided in the captured information to identify one or more objects, as well as, associated features pertaining to those objects. For example, Figure 8 illustrates an exemplary chart depicting reflectance as a function of wavelength for at least a portion of three objects. In the illustrated example, for at least purposes of discussion, the captured information obtained via the PCS 210 can provide information that can be represented by at least the three depicted lines (*L₁, L₂, L₃*). However, the captured information can include reflectance information that can correspond to more than the three lines depicted in Figure 8.

According to certain embodiments, and as discussed herein, the three depicted lines (*L₁, L₂, L₃*) can correspond to captured reflectance information for three different objects, such as, for example, a seed, fertilizer, and soil, among other objects. Moreover, as previously discussed, each object can have a distinctive reflectance characteristic that can be captured by the captured information. Such distinctive reflectance characteristics can be utilized by at least the controller 202 to identify, from the captured information obtained by the PCSs 210, different objects. For example, seeds, weeds, soil, pebbles, and fertilizer, among other objects, can each have distinct reflectance characteristics that can assist the controller 202 in identifying at least the presence of such objects in the captured information. Thus, the distinct reflectance characteristics can result in a distinctive reflectance value, including range of values, at a corresponding wavelength(s), including range of wavelengths, that can be different for different objects. Accordingly, such known distinctive characteristics can be used by the controller 202 in evaluating information such as that presented in Figure 8 to identify the corresponding object, including object type.

Additionally, the reflectance characteristics of such objects can change with changes in one or more characteristics, including properties, of those identified objects. Thus, from the captured image date, the controller 202, including the processor 204, can identify the object in connection with certain characteristics, including properties, of that object. For example, rather than illustrating three different objects, the three depicted lines (*L₁*, *L₂*, *L₃*) can, for at least purposes of illustration, correspond to captured reflectance information for three characteristics of the same object type, such as, for example, soil. With such an example, a reflectance value associated with a first portion or area of the soil in a furrow 216 represented in the captured information can correspond to the first illustrated line (*L₁*)*,* a second portion or area of the soil in the furrow can correspond to a second line (*L₂*), and a third portion or area of the soil in the furrow can correspond to a third line (*L₃*). Thus, while each of the three lines (*L₁*, *L₂*, *L₃*) may fall within reflectance values associated with soil, the differences in the illustrated reflectance values can correspond to differences in particular characteristics of the soil in those different areas. For example, as higher level of moisture content can be associated with higher levels of light absorption, the level or degree of reflectance of the soil can be inversely proportional to the moisture content of the soil. Thus, for an example in which the illustrated reflectance corresponds to reflectance levels for soil, the lower reflectance range of the first line (*L₁*) can identify an area in the soil in which the moisture content is higher than the areas associated with the illustrated second and third lines (*L₂*, *L₃*). Conversely, the higher reflectance range of the third line (*L₃*) can identify area in the soil in which the moisture content is lower than the areas associated with the illustrated first and second lines (*L₁*, *L₂*). Additionally, the particular reflectance ranges for the three depicted lines (*L₁, L₂, L₃*) can each correspond to a known moisture content, including a quantitative value or range, for soil. Thus, in addition to using the reflectance values to identify an object, the controller 202 can further be operated to identify particular characteristics of that identified object, such as, for example, a moisture content on a percentage basis. Such information can then be used in a variety of different manners, including with respect to adjusting the depth at which the planter row unit 50 may be digging the furrow and/or the depth at which the seeds are being planted, among other adjustments.

While the foregoing is discussed with respect to different properties of soil, and more specifically, moisture content, such reflectance information can be used in a variety of other, or additional, manners. For example, rather than providing information regarding the moisture content of soil, the illustrated lines (*L₁*, *L₂, L₃*) can instead correspond to characteristics about different portions of a seed, including a portion of the seed having no fertilizer (e.g., *L₁*), a portion having the seed partially covered by some fertilizer (e.g., *L₂*), and another portion of the seed having thereon a larger quantity of fertilizer (e.g., *L₃*). In such situations, the varying degrees of reflectance can indicate not only is the object a seed, but can also provide information regarding variances in the amount of fertilizer applied to different portions of the seed. Such information can then be used in a variety of different manners, including with respect to adjusting the operation of the sprayer 240 so as to attain a more consistent application of fertilizer on the seed.

The captured information can include, or be correlated to, an identified location within the field of view of the PCS 210. Additionally, or alternatively, position information regarding the objects represented in the captured information obtained by the PCS 210 can be provided by other types of sensors, including other computer vision or image processing techniques that may or may not include machine learning. For example, in lieu of, or in addition to, using the PCS 210 to identify a location of one or more objects, the location of the objects can be determined using a vision system 235 of the detection system 200. Such a vision system 235 can include, for example, one or more stereo depth cameras, stereo sensors, RGBD (red, green, blue, depth) cameras, three-dimensional sensors, LIDAR, radar, and three-dimensional cameras, as well as combinations thereof, among other types of sensors. In such situations, the captured information provided by the PCS 210 can supplement the location information provided by other types of sensors, including, for example, with respect to one or more characteristics of the objects, including, but not limited to, moisture content. Thus, the captured information obtained by the PCS 210 can be used with information obtained by other sensors in connection with sensor fusion.

According to certain embodiments, the PCS 210 and a camera of the vision system 235 can simultaneously capture an image of the soil surface as light is strobed at a location where the row unit has created a furrow. The camera can use an image sensor that can be especially sensitive to photons in the near infrared (NIR) and short wave infrared (SWIR) spectrum. Further, the camera optics can include a narrow band pass filter around the wavelength of light transmitted by the PCS 210 such that the vision system 235 is generally immune to changes in ambient light.

According to such an embodiment, the optics of the PCS 210 can focus a transmitted light to create a relatively sharp laser line on the soil surface perpendicular to the furrow being created by the plantar row unit 50, which can be used to compute the depth of the furrow that is being, or has been, created by the plantar row unit 50. However, according to other embodiments, the PCS 210 can be oriented to transmit light to create a relatively sharp laser line on the soil surface while being non-perpendicular to the ground surface.

Additionally, the PCS 210 can transmit a phase modulated light signal that is broadcasted over the area observed by the camera of the vision system 235. For example, the PCS 210 can transmit a light pattern over at least a portion, if not more, of the area of the adjacent ground that is within the field of view of the camera. According to certain embodiments, the light pattern can be transmitted instantaneously over scanned over a short period of time using a two-dimensional (2D) microelectromechanical systems (MEMS) mirror.

The image sensor of the camera can include a photonic mixer that can measure a phase shift of a captured light signal to determine a distance from the camera to the soil surface at different pixels, if not each pixel, represented in the information captured by the camera, which can be used to create a depth map image. The depth map image can be processed, such as, for example, by the processor 204, to measure a depth of the furrow in multiple locations along the furrow. Further, information captured by the camera can be used to determine, such as, for example, by the processor 204, an intensity image over the observed area, which can be segment into different classes (e.g., furrow, plant residue, etc.), which can facilitate the comprehension of planting conditions.

Additionally, or alternatively, the PCS 210 can broadcast unmodulated light over an area that is observed by at least two cameras of the vision system 235. In such an embodiment, the plurality of cameras can be spaced some known distance apart from each other, and be operated to capture images simultaneously. The information captured, namely images, by the different cameras can then be processed by the processor 204 to generate a stereoscopic depth map of the imaged area. Optionally, according to certain embodiments, the at least two cameras can be event-based vision sensors that are configured to perceive am event in the form of a sudden change in the intensity, such as luminance, of individual pixels. According to such an embodiment, the distance to the corresponding events, as detected by the event-based sensor, can be determined by the processor 204 using stereoscopic methods.

The camera or vision system 235 can also include or use an intensity sensor that is configured to sense and provide information for early visual-processing characteristics of living organisms, including, for example, a neuromorphic image sensor. Moreover, the intensity sensor can be configured to instantaneously transmit pixel information when pixel intensity values, as identified by at least the intensity sensor, change suddenly. The associated light pattern can be analyzed, such as, for example, by the processor 204, to compute a depth of the furrow being created by the plantar row unit 50.

Such location information can further be used by the controller 202 to determine, including identify, the relative positions of the objects, including, for example, a position of deposited fertilizer at least on the soil in a furrow relative to the deposited seed. Additionally, such object location information can be further be selectively used with location information provided by the location system 208 such that the location of one or more of the object(s), including, for example, a GPS location for one or more individual seeds, can be identified and recorded. Further, according to certain embodiments, a plurality of reflectance information in the captured information, and the associated location information for that reflectance information, can be used by the controller 202 to identify a size and/or shape of the detected object. According to certain embodiments, such detected size and/or shape information can be utilized by the controller 202 to detect an orientation of an object. For example, for at least certain shapes, an identification of a size and/or shape of the detected portion of the object can be used by the controller 202 to identify what portion of the objected is being detected. The controller 202 can also use such information in view of generally known size and/or configuration information for the object to determine an orientation of the object.

As discussed above, the data image information can also include a time component, such as, for example, a time, or time difference, from transmission of the illumination from the emitter 212 to receipt of the reflected illumination from the object(s) that can assist in determining location, position, or configuration information. Thus, for example, such information can also be utilized to determine a size or shape on a detected object, including for example, a structure, including depth of a furrow, as well as a size, position, and orientation of an object in a manner similar to that discussed above.

The captured information obtained at block 706 can therefore be utilized by the controller 202, including the processor 204, at block 708 to derive information regarding certain agricultural characteristics, including, for example, information regarding the agricultural operation being performed using the agricultural machine 100 and/or the performance of one or more components of the agricultural machine 100. As previously discussed, captured information obtained via one or more PCSs 210 can be utilized for a variety of different purposes, and connection with deriving a variety of different types, including combinations of types, of information.

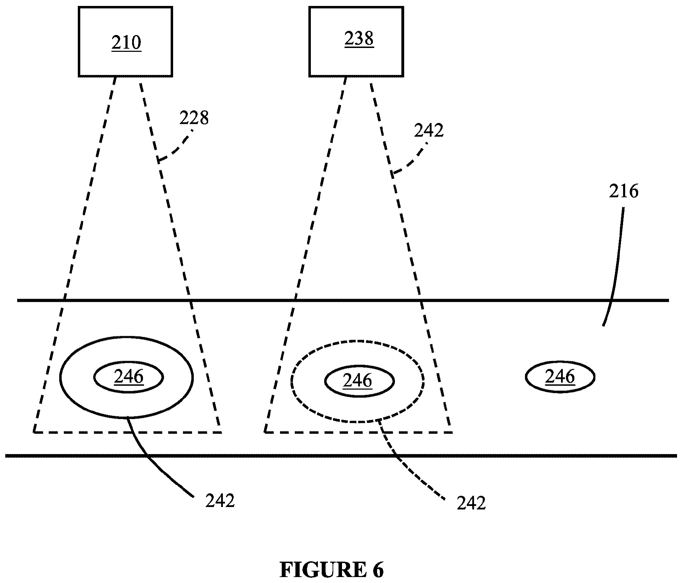

For example, as generally indicated by Figure 6, according to certain embodiments, the captured information obtained via one or more PCSs 210 can be utilized by the controller 202 at block 708 to detect information regarding the application, including spraying by the sprayer 240 of the fertilizer applicator 238, of fertilizer 242 onto each individual seed 246 and/or the soil in the furrow 216 around, or otherwise generally adjacent to, each individual seed 246. As previously discussed, the fertilizer 242 can have distinct reflective properties that can allow the controller 202, including the processor 204, to detect the presence, as well as the location, of the fertilizer 242 in the captured information obtained by the PCS 210. Additionally, according to embodiments in which the fertilizer 242 is at least intended to be sprayed by the sprayer 240 onto at least the entire surface of the seed 246 positioned to reflect light to the receiver 214, such captured information can allow the controller 202 to effectively determine, by the controller 202, the location of the seed, as well as validate that fertilizer 242 was sprayed onto at least the seed 246 and/or the soil adjacent to the seed, which may correspond to a successful fertilizer application.

According to certain embodiments, the captured information obtained via one or more PCSs 210 can be utilized by the controller 202 at block 708 to detect a health level of individual seeds, also referred to as seed health detection. The health level of a seed can have an agronomic impact. For example, in at least certain instances, a seed can become damaged before, or in connection with, being deposited in the furrow 216. Seeds at different health levels can have different reflectivity characteristics that can be identified by the controller 202 from the captured information obtained by the PCS 210, including as identified using the above-mentioned model. Additionally, according to certain embodiments, such seed health detection can be utilized, such as, for example, at block 710 or block 718, to adjust an amount of fertilizer applied to one or more of the seeds. Moreover, according to certain embodiments, the detection system 200, including for example, the controller 202, can be configured to determine, and adjust, the application of fertilizer, including the amount and/or type of fertilizer, applied by the fertilizer applicator 238 to a seed in response to the determination of the health level of the seed.

In addition to, or in lieu of, the detected seed health, the ability to use the controller 202 to dynamically adjust the application of fertilizer applied by the fertilizer applicator 238 can also be based on a variety of other information derived from the captured information obtained by the PCS 210 including, for example, determinations of the size(s) of the seed, among other information. Moreover, the control, and any corresponding adjustments, by the controller 202 of the fertilizer applicator 238 can be based on real-time measurements, which can include near real-time measurements, obtained using the captured information from the PCS 210 and used in determining at least the variety of different types of information discussed throughout this disclosure.

As previously discussed, the captured information obtained via one or more PCSs 210 can also be utilized by the controller 202 at block 708 to determine the soil moisture content, including, for example, moisture content percentages of the soil at least in which the seeds are being, or will be planted, including, for example, of the furrow 216. Moreover, as indicated above, moisture content can impact the reflectance of the soil, as detected by the PCS 210. Thus, for example, as the amount of moisture in the soil increases, the amount of near infrared light reflected back at PCS 210 can decrease, or is associated with less reflectance of the soil. According to certain embodiments, such variances in the reflectivity of the soil based on moisture content can assist the controller 202 in creating an index measure for the amount of moisture in the soil for the furrow, as well as for the surrounding areas. Further, such moisture content information can be utilized in a variety of manners. For example, such moisture content information can be utilized to determine a depth at which the seeds are, in the corresponding area, to be planted. With respect to planter row units 50 in which the depth at which the planter row unit 50 is adjustable via a signal communicated from the controller 202, as moisture content levels along the furrow(s) vary, or are identified to be varying, as indicated by the captured information, the controller 202 can dynamically adjust the depth at which the planter row unit 50 digs the furrow such that the target planting depth can vary in accordance with the associated moisture content of the associated soil. As also previously mentioned, according to certain embodiments, the captured information obtained via one or more PCSs 210 can be utilized by the controller 202 at block 708 to detected information, including measurements, relating to the structure of the furrow, including in dusty environments. Moreover, dusty conditions can be created, or otherwise contributed to, by the planter row unit 50 digging the furrow. Such dust can be in the form of small particles in the air that can cause light in the visible light range to scatter considerably, making it difficult, if not sometimes impossible, to determine the furrow structure in using information from the visible light spectrum. Further, as shown by at least Figure 4, the PCS 210 can be positioned relatively close to the ground surface, thereby exposing the PCS 210, in that example the planter PCS 210a, to such dusty conditions. However, PCSs 210 operate at longer wavelengths, which, compared to visible lights, is able to penetrate through dust more effectively, thereby reducing the amount of light scatter. Thus, compared to at least visible light-based sensors, the PCS 210 is generally able to see through some of the dust to so as to attain sufficient information that can be used by the controller 202 to compute the furrow structure despite light being scattered by the dust particles. Such furrow structure information can include measurements such as, but are not limited to, furrow depth and/or geometry, and the depth at seed is planted in the furrow, as well as information that can be used to determine trench collapse and furrow closure, among other agronomic information. Information derived by the controller 202 from the captured information obtained by the PCS 210 regarding the furrow structure can also be used by the controller 202 determine the quality or profile of the furrow structure, including instances of collapsing of the furrow. For example, according to certain embodiments, the determined geometry of the furrow structure can be compared or otherwise evaluated in relation to predetermined furrow structures or profiles to identify potential discrepancies or variations. Such an evaluation can further include the controller 202 determining whether the identified discrepancies or variations, if any, are outside of one or more predetermined thresholds or tolerances. If the controller 202 determines that identified discrepancies or variations are outside of, or do not satisfy, the predetermined threshold(s) or tolerance(s), the controller 202 can, at block 710, generate one or more signals to facilitate a change in the operation, including, for example, one or more settings of the planter row unit 50, to at least attempt to remedy the cause of such identified discrepancies or variations. For example, according to certain embodiments, in response to a determination of the predetermined threshold(s) or tolerance(s) not being satisfied, the controller 202 can generate a signal to change a depth at which the planter row unit 50 is cutting the furrow into the ground, among other adjustments.

According to certain embodiments, the captured information obtained via one or more PCSs 210 can be utilized by the controller 202 at block 708 to obtain metrics to detect whether the PCS 210 is to be cleaned. Moreover, while the PCS 210 provides benefits with respect to operating in dusty conditions, such dust can, at times, accumulate onto the PCS 210, including on the receiver 214, in a manner that can limit the amount of light being received by the PCS 210. Thus, the controller 202 can utilize certain quality metrics, such as, for example, relating to the among of captured information, including, for example, the number data points detected or an identification of regions, or region sizes, in the field of view 228 of the PCS 210 for which no data is being received to automatically detect when the PCS 210 needs to be cleaned.

According to certain embodiments, the captured information obtained via one or more PCSs 210 can be utilized by the controller 202 at block 708 to detect agricultural characteristic such as, for example, field residue, namely non-soil and non-seed debris, within the field during planting operations. At least certain types of such field residue can steal nutrients from the planted seeds, or obstruct the seed being released from the planter row unit 50 from being placed in the ground effectively. An example of field residue that can qualify as an agricultural characteristic can also include crop material left over from the previous harvesting season, weeds, and rocks, among other debris. As discussed above, as with soil, seeds, and fertilizer, each type of field debris can have a distinct reflectance characteristic, as well as distinct geometric characteristics. Such distinct characteristics can, when compared to at least traditional vision/image processing techniques that rely on information from light in the visible wavelength spectrum, improve the ease, and, moreover, the efficiency and accuracy, at which the controller 202 can detect the field residue from the captured information provided by the PCS 210.

The information derived by the controller 202 from the captured information obtained via one or more PCSs 210 can, additionally, or alternatively, at block 708 be utilized by the controller 202 to evaluate whether a planting malfunction has occurred. For example, according to certain embodiments, the detection system 200 can be operated such that information can be obtained using the PCS 210 for each individual seed deposited by the planter row unit 50. Thus, the absence of a detection of a seed that is anticipated to have been planted via operation of at least the seed delivery system 220 can be identified by the controller 202 based on an absence of corresponding information, including reflectance information, in the captured information for that anticipated seed. Such an absence of information indicating a presence of the seed, or an indication of an absence of a collection seeds, can be identified by the controller 202 and serve as a basis for the controller 202 determining an actual or potential malfunction in at least operation of the seed delivery system 222.

At block 710, from information derived by the controller 202 from the captured information obtained by the PCS 210, the controller 202 can automatically make dynamic adjustments in the agricultural operation being performed by the agricultural machine 100. For example, as mentioned above, according to certain embodiments, information derived at block 708 regarding the moisture content of the soil, or the furrow structure, can result in the controller 202 automatically generating one or more signals to change a depth at which the planter row unit 50 is digging the furrow and/or a depth at which the planter row unit 50 is planting the seed. Additionally, or alternatively, based on information derived at block 708 regarding field residue, the controller 202 can, at block 710, generate a signal(s) to initiate management of the field residue. Such management of the field residue can include, for example, the controller 202 generating a signal to operate one or more fans that can generate a force that can facilitate a displacement of the field residue to another location. Additionally, or alternatively, the controller 202 can generate a signal to adjust an operation of the seed delivery system 222, including an adjustment that prevents the planting or depositing of a seed on a detected rock. Further, as discussed above, information derived at block 708 can be used by the controller 202 at block 710 to adjust an operation(s) of the fertilizer applicator 238, including, but not limited to, the amount, fertilizer type, and/or location at which fertilizer is released onto the seed and/or soil by the operation of the fertilizer applicator 238. The controller 202 can also use the captured information obtained by the PCS 210 to dynamically make adjustments with respect to the operation of the planter row unit 50 with at least respect to the closing of a furrow.

At block 712, the information derived from block 708 can be used to generate one or more types of maps. For example, according to certain embodiments, the information derived from block 708 relating to the location at which each seed, as well as the associated planting depth of that seed, has been deposited by the planter row unit 50, or otherwise planted in the field, can be utilized by the mapping system 236 to generate one or more high resolution spatial maps depicting seed location. Additionally, or alternatively one or more maps can include location information regarding field residue, including, for example, the locations of detected weeds and/or rocks. Further, such seed and/or field residue location, as well as the locations of other agronomic metrics, among other operational data, that may be determined from the captured information obtained by the PCS 210, can be expressed in a variety of different manners, including, for example, via a GPS location, among other manners of expressing or identifying location information that may be utilized by at least the location system 208. Additionally, with respect to at least field residue, such automatic mapping can include using a pin drop tool, among other location identifiers, for identifying a location for a future performance of a corrective action, including, for example, rock removal.

Additionally, one or more of the above-discussed operational data, including agronomic metrics, determined by the controller 202 from the captured information obtained by the PCS 210 can, at block 714, be gathered for communication to one or more operators at block 716. Such gathered and communicated data can include any of the above-discussed information, as well as various combinations thereof. For example, such gathering and communication of data at block 714 and block 716, respectively, can include information relating to one or more of soil moisture content, furrow structure, seed location, seed planting depth, seed health, fertilizer application, field residue, residue on the PCS 210, and/or closing quality, among others. Additionally, the presentation of the gathered data at block 716 can be in addition to, or in lieu of, the map information generated at block 712. Alternatively, either or both the gather operation data from block 714 and the mapping information generated at block 712 can be selectively presented for the operator at block 716.

Such selective display of information from either or both blocks 712 and 714 can be communicated via one or more user interfaces 234, which, again, can be at the agricultural machine 100 and/or at a remote location. For example, according to certain embodiments, the map information generated at block 712 and/or the operational data, including agronomic metrics, generated at block 714 can, at block 716, be offboarded for viewing at a remote operations center, among other locations. Further, for each of the various types of operational data that can be derived from the captured information, the detection system 200 can be configured to generate a record, such as, for example, on either or both a per seed basis and a geospatially aggregated level, that can, at block 714, be made viewable via the user interface 234, including, for example, a user interface 2345 at an operations center.

The communication at block 716 can also correspond to the controller 202 generating one or more signals to communicate an alert via the user interface 234 to an operator of the agricultural machine 100. For example, as previously discussed, the information determined at block 708 can correspond to a determination relating to a deviation in the anticipated furrow quality or profile, a malfunction of the seed delivery system 222, and build up of residue on the PCS 210, an issue with the quality of the furrow closing, the presence of field residue, possible variations in the application of fertilizer by the fertilizer applicator 238, and/or seed health, among other determinations. While for at least certain embodiments the controller 202 can generate one or more signals that can facilitate at least an attempt at a corrective adjustment in the operation of the agricultural machine 100, the detection system 200 can also generate an alarm at block 716 to alert an operator of a detection of at least a potential issue. In certain embodiments, in addition to, or in lieu of, an automatic corrective action, from the information derived at block 708, and/or in response to an alert, if any, at block 716, the operator can manually input a command at block 718 via the user interface 234 that can facilitate the controller 202, including the processor 204, to make an corrective adjustment in the operation of the agricultural machine 100. Such an adjustment in response to a command from the operator may, or may not, be similar to an adjustment that may be automatically made at block 710, or may adjust such an automatic adjustment. Thus, such an input from the operator can be utilized to adjust, or modify an automatic adjustment, relating to one or more of the depth the furrow is being dug, the seed planting depth, the location seed is being planted, and/or the application of fertilizer, among other adjustments.

The captured information obtained from the PCS 210 can be displayed on the user interface 234 in a variety of manners. For example, according to certain embodiments, the captured information can be visually presented in the form of a grayscale infrared (IR) image, a topological depth image, a point cloud, or as grayscale on point cloud, among other manners of visualization. Additionally, or alternatively, visualization of the captured information obtained from the PCS 210 can be presented as one or more video overlays that, along with other information, can be displayed on the user interface 234. For example, according to certain embodiments, the information captured by the PCS 210 can be overlayed onto video provided by other sensors, including videos or images, attained by the vision system 235. Additionally, or alternatively, visualization of the captured information obtained from the PCS 210 can be presented as a film strip type visualization that can be generated from subsequent images obtained from the captured information provided by the PCS 210 that are stitched together by using the same features from successive frames, thereby creating a larger continuous image. Further, the captured information, as well as images from the vision system 235, can be used to generate real time spatial map layers having the above-discussed operational data being selectively viewable on the user interface 234.

The map and operation data generated at block 712 and block 714, respectively, the operator adjustment, if any, at block 718, and/or the automatic adjustment, if any, at block 710, among other information determined at block 708, can be recorded at block 720 for at least future potential use, including, but not limited, for purposes of future planning. Moreover, such recorded information can be used in a variety of different manners, including, for example, with respect to planning future agricultural operations. For example, such information can be utilized with respect to future fertilizer applications and irrigation approaches, as well as in connection with tracking yield and other crop outcomes. Further, the method 700 accommodates overlaying multiple geospatial map outcomes from other field operations, which can aid in determining the impacts numerous factors corresponding to at least information derived from the captured information obtained via the PCS 210 can have final agronomic outcomes. Further, the information can be stored at block 720 at a variety of onboard and/or offboard locations, including, but not limited to, a remote database 302. Such recorded information can also be utilized for purposes of machine learning of the neural network 250, as indicate by block 722. For example, the information stored at block 720 can be used in connection with refining the model(s) used to determine information from the captured information attained from the PCS 210, as discussed above.

## Claims

1. A detection system (200) for detection of an agricultural characteristic during a performance of an agricultural operation by an agricultural machine (100), the detection system (200) comprising:
an implement configured for performance of the agricultural operation;
a point cloud sensor (210) coupled to the agricultural machine (100), the point cloud sensor (210) configured for receipt, during the performance of the agricultural operation, a captured information corresponding to the agricultural characteristic, the captured information comprising information captured by the point cloud sensor (210) in a near infrared light spectrum or a short wavelength infrared light spectrum;
at least one processor (204); and
a memory (206) coupled with the processor (204), the memory (206) including instructions that when executed by the processor (204) cause the processor (204) to:
determine, from the captured information, a reflectance value;
determine, using at least the reflectance value, an object represented by the captured information; and
determine, using at least the captured information, at least one of a location of the object, a characteristic of the object, and whether the object or the agricultural operation satisfies a predetermined threshold.

2. The detection system (200) of claim 1, wherein the agricultural operation comprises a planting operation, and the agricultural characteristic is a plant depth of an individual seed, and wherein the memory (206) includes instructions that when executed by the processor (204) further cause the processor (204) to determine at least one of (1) a planting depth of each individual seed of a plurality of individual seeds, (2) a planting location of each individual seed of the plurality of individual seeds, and (3) a soil moisture content.

3. The detection system (200) of claim 1 or 2, wherein the memory (206) includes instructions that when executed by the processor (204) further cause the processor (204) to generate one or more maps that overlay on one or more maps generated by a vision system at least one of (1) the planting depth of each individual seed, (2) the planting location of each individual seed, and (3) the soil moisture content.

4. The detection system (200) of one of the claims 1 to 3, wherein the memory (206) includes instructions that when executed by the processor (204) further cause the processor (204) to, in response to a determination that the agricultural operation does not satisfy the predetermined threshold, automatically adjust a setting of the agricultural machine (100), the setting corresponding to at least one of an operation of a fertilizer applicator of the agricultural machine (100), a plant depth that the agricultural machine (100) plants a seed into a furrow, a size of the furrow, and a closure of the furrow.

5. A method (700) for detecting an agricultural characteristic during a performance of an agricultural operation by an agricultural machine (100), the method (700) comprising a detection system according one of the claims 1 to 4, the method further comprising:
receiving (706), from the point cloud sensor (210) coupled to the agricultural machine (100) and during the performance of the agricultural operation, a captured information corresponding to the agricultural characteristic, the captured information comprising information captured by the point cloud sensor (210) in a near infrared light spectrum or a short wavelength infrared light spectrum;
determining (708), from the captured information, a reflectance value;
determining (708), using at least the reflectance value, an object represented by the captured information; and
identifying (708), using at least the captured information, at least one of a location of the object, a characteristic of the object, and whether the object or the agricultural operation satisfies a predetermined threshold.

6. The method (700) of claim 5, wherein the identifying comprises identifying a location of the object using at least a global positioning system (208).

7. The method (700) of claim 5 or 6, wherein:
the agricultural operation comprises a planting operation,
the agricultural characteristic is a plant depth of an individual seed, and
the identifying comprises identifying the planting depth of the individual seed.

8. The method (700) of one of the claims 5 to 7, wherein the identifying comprises identifying whether the agricultural operation satisfies the predetermined threshold, and further comprising adjusting (710) the agricultural operation in response to identifying the agricultural operation does not satisfy the predetermined threshold.

9. The method (700) of one of the claims 5 to 8, wherein the identifying (708) comprises identifying whether the object satisfies a seed health level, and further comprising, in response to identifying the seed health level does not satisfy the predetermined threshold, adjusting (710) an output of a fertilizer by the agricultural machine (100).

10. The method (700) of one of the claims 5 to 9, wherein the identifying (708) comprises identifying the characteristic of the object, the characteristic of the object being a moisture content of a soil, and further comprising automatically adjusting (710), in response to identifying the moisture content of the soil, a depth of a furrow being dug by the agricultural machine (100).

11. The method (700) of one of the claims 5 to 10, wherein the agricultural operation comprises a digging of a furrow by the agricultural machine (100), and the identifying (708) comprises identifying whether at least one of a size and a shape of the furrow satisfies the predetermined threshold, and further comprising automatically adjusting (710), in response to determining the size or the shape of the furrow does not satisfy the predetermined threshold, a setting of the agricultural machine (100) to adjust, as the agricultural machine (100) continues to dig the furrow, the size or the shape of the furrow being dug to satisfy the predetermined threshold.

12. The method (700) of one of the claims 5 to 11, further comprising:
recording (720) the captured information;
recording (720) an adjustment to at least one of the agricultural machine (100) and the agricultural operation made in response to an information derived from the captured information; and
updating (722), via machine learning and using the recorded captured information and the recorded adjustment, a model used to identify at least one of the location of the object, the characteristic of the object, and whether the object or the agricultural operation satisfies the predetermined threshold.

13. The method (700) of one of the claims 5 to 12, further comprising generating (712) a map, the map comprising information derived from the captured information overlaying information derived from a vision system (235).

14. The method (700) of one of the claims 5 to 13, wherein the performance of the agricultural operation comprises a travel of the agricultural machine (100) along a terrain, and wherein the identifying (708) comprises identifying a change in an elevation of the terrain at an upstream location ahead of the agricultural machine (100), and further comprising proactively adjusting (710) a control setting of the agricultural machine (100) in response to detection of the change in the elevation as the agricultural machine (100) travels along the terrain and before the agricultural machine (100) reaches the upstream location.

15. The method (700) of one of the claims 5 to 14, wherein the performance of the agricultural operation comprises a closure of a furrow by the agricultural machine (100), and wherein the identifying (708) comprises identifying whether the closure of the furrow satisfies the predetermined threshold, and further comprising adjusting (710), in response to identifying the closure does not satisfy the predetermined threshold, a furrow closure operation of the agricultural machine (100).
